# EUROPEAN PATENT SPECIFICATION

(11) **EP 3 031 566 B1**
(45) Date of publication and mention of the grant of the patent: **20.06.2018**
(21) Application number: 14833782.7
(22) Date of filing: 01.08.2014
(51) Int. Cl.: B23K 35/26, C22C 12/00, C22C 13/02, B32B 15/01

(54) **LEAD-FREE SOLDER ALLOY**
BLEIFREIE MESSINGLEGIERUNG
ALLIAGE DE BRASAGE SANS PLOMB

(30) Priority: 05.08.2013 US 201313959224
(43) Date of publication of application: 15.06.2016
(73) Proprietor: Senju Metal Industry Co., Ltd, Tokyo 120-8555 (JP)
(72) Inventor: TACHIBANA, Ken, Tokyo 120-8555 (JP); NOMURA, Hikaru, Tokyo 120-8555 (JP); LEE, Kyu-oh, Chandler, Arizona 85226 (US)
(74) Representative: D Young & Co LLP
(86) International application number: PCT/JP2014/070374
(87) International publication number: WO 2015/019966

(56) References cited:
- EP-A1- 0 787 819
- EP-A1- 1 894 667
- WO-A1-2006/131979
- CN-A- 1 927 525
- JP-A- H0 740 079
- JP-A- H0 788 679
- JP-A- H11 221 693
- JP-A- 2007 090 407
- JP-A- 2009 131 903
- JP-A- 2010 167 472
- JP-A- 2010 167 472
- US-A1- 2012 038 042
- DATABASE WPI Week 201168 Thomson Scientific, London, GB; AN 2011-G14360 XP002768610, -& CN 102 029 479 A (GUANGZHOU RES INST NONFERROUS METALS) 27 April 2011 (2011-04-27)

## Description

### Technical Field

This invention relates to a Sn-Bi-Sb based lead-free solder alloy and particularly a Sn-Bi-Sb based lead-free solder alloy having excellent bonding reliability.

### Background Art

In recent years, electronic equipment such as cellular phones is becoming smaller and thinner. In electronic parts such as semiconductor devices used in such electronic equipment, thin substrates having a thickness from around several millimeters to 1 mm or less are now being used.

On the other hand, Sn-Ag-Cu solder alloys have been widely used as lead-free solders. The Sn-Ag-Cu solder alloys have a relatively high melting point, which is around 220° C even for a eutectic Sn-3Ag-0.5Cu solder alloy. Therefore, when soldering of terminals (electrodes) to thin substrates like those described above is carried out using the Sn-Ag-Cu solder alloy, the substrates sometimes warp due to the heat at the time of soldering, leading to the occurrence of bonding defects.

As a countermeasure against such bonding defects, warping of thin substrates can be suppressed and bonding reliability can be improved by carrying out soldering at lower temperatures. Sn-Bi solder alloys are known as low melting point solder alloys which can be used for this purpose. Among Sn-Bi solder alloys, a Sn-58Bi solder alloy has a very low melting point of around 140° C, and it can suppress warping of substrates.

However, Bi is inherently a brittle element, and Sn-Bi solder alloys are also brittle. Even if the Bi content of a Sn-Bi solder alloy is reduced, due to segregation of Bi, this solder alloy becomes brittle. Solder joints which are obtained by soldering using the Sn-Bi solder alloys may develop cracks due to their brittleness when large stresses are applied, and their mechanical strength may deteriorate.

In order to cope with reductions in the size of electronic parts, it is necessary to decrease the area of substrates used therein. It is also necessary to realize a reduction in the size of the electrodes and a reduction in the pitch of the electrodes. Since the amount of solder alloy used for soldering each electrode is decreased, the mechanical strength of soldered portion is decreased.

Due to these problems, there have been attempts to improve various properties including mechanical strength of the Sn-Bi solder alloys, which exhibit low melting points capable of suppressing warping of substrates, by adding some element or elements to the solder alloys.

Patent Document 1 discloses adding Sb to a Sn-Bi solder alloy, thereby improving the ductility of the alloy.

Patent Document 2 discloses adding Sb and Ga to a Sn-Bi solder alloy, thereby improving the brittleness and increasing the bonding strength of Sn-Bi solder alloys.

Patent Document 3 discloses suppressing Cu erosion of electrodes by addition of Cu to a Sn-Bi solder alloy and increasing the mechanical strength of the solder alloy by addition of Sb.

Patent Document 4 discloses that addition of Ag, Cu, In, and Ni as essential elements to a Sn-Bi solder alloy reduces a decrease in elongation and mechanical fatigue properties expressed by the length of time until the occurrence of cracks (the crack occurrence life). In addition, it discloses that addition of Sb decreases the crack occurrence life.

As stated above, decreases in the size of electronic parts in recent years have led to a decrease in the size of solder joints. As a result, the amount of solder paste used for connection of each terminal (electrode) has become smaller, resulting in a decrease in the bonding strength of soldered portion. In this respect, Patent Document 5 discloses a solder bonding material comprising a Sn-Bi based solder alloy and a thermosetting adhesive which is added thereto to supplement the bonding strength of the soldered portion. It also discloses that the thermosetting adhesive may be used in the form of a thermosetting adhesive composition which further contains a thixotropic agent, a curing agent, a flux and the like.

### Prior Art Documents

### Patent Documents

Patent Document 1: JP 2010-167472 A; Patent Document 2: JP 07-040079 A;
Patent Document 3: JP 11-320177 A; Patent Document 4: JP 2004-017093 A;
Patent Document 5: JP 2007-090407 A. Other previously proposed arrangements are disclosed in Database WPI week 201168, Thomson scientific, London, GB (AN 2011-G14360 & CN 102 029 479); and patent document EP 1894667.

### Summary of the Invention

### Problems to be Solved by the Invention

Terminals (Electrodes) of an electronic part which are made of copper (Cu) are often treated in general by electroless Ni plating followed by a noble metal plating such as Au plating or a combination of Pd plating and Au plating. The Au plating is formed in order to protect the underlying Ni plating against oxidation and improve the surface wettability by molten solder. The electroless Ni plating typically forms a Ni coating containing an appreciable amount of phosphorus (P). This phosphorus is mainly derived from the reducing agent (e.g., sodium hypophosphite) used for electroless plating. Usually, such Ni plated coating has a P content of at least a few percent by mass, for example, from 2 to 15 mass %.

In the inventions disclosed in Patent Documents 1 and 2, for example, if soldering is carried out on terminals (electrodes) treated by electroless Ni plating, due to the diffusion coefficient of Ni into the solder alloy which is larger than the diffusion coefficient of P, Ni in the plated coating preferentially diffuses into the solder alloy. P precipitates in the interface with the soldered portion in a greater proportion than Ni, leading to the formation of a so-called P-rich layer in the interface. Even when a noble metal coating such as an Au coating is present atop the Ni coating to form a Ni/Au plating, preferential diffusion of Ni occurs since the Au or other noble metal coating is extremely thin and does not inhibit diffusion of Ni as discussed later. The P-rich layer is hard and brittle, and it deteriorates the shear strength of a soldered portion. When a soldered portion having such a P-rich layer fractures by shearing, a phenomenon such that the Ni plating layer is exposed often occurs. This indicates that the fracture occurs by detachment of the P-rich layer from the terminal (electrode) rather than by a fracture of the soldered portion itself. Therefore, the formation of a P-rich layer adversely affects the bonding reliability of a soldered portion.

Patent Document 3 states an effect of the addition of Sb or Cu, but the contents of these elements are not clear, and the effect of adding Sb has not been proved. In addition, it does not disclose that the mechanical strength of the solder joint is increased by the addition of Cu.

Patent Document 4 discloses that when both Sb and Cu are added, there is a tendency for shortening of the crack occurrence life to be promoted, and that the addition of In as an essential element produces an increase in elongation. However, there is no mention in that document that the ductility of a solder alloy or the mechanical strength of a soldered portion is improved by addition of Sb and Cu.

Patent Document 5 discloses a solder bonding material comprising a Sn-Bi based solder alloy and a thermosetting resin may further contain Sb and Cu. Patent Document 5 discloses that Sb and Cu can be added in order to suppress coarsening of the structure of the solder alloy and obtain a long lifespan. There, however, is no evidence in Patent Document 5 that the ductility or tensile strength of the solder alloy is improved or that the shear strength of a soldered portion is improved by the addition of Sb and Cu. Furthermore, it is unclear what specific alloy composition and what mixing ratio of components can provide the desired effect.

The problem of the present invention is to provide a Sn-Bi-Sb based lead-free solder alloy which is capable of forming a solder joint with improved bonding reliability.

### Means for solving Problem

The present inventors have paid attention to the fact that in the case of soldering to electrodes having a P-containing Ni coating typically formed by electroless Ni plating, the diffusion coefficient of Ni into a solder alloy is larger than the diffusion coefficient of P, and have found that it is possible to suppress the growth of a P-rich layer by suppressing diffusion of Ni into a solder alloy during soldering. The invention is defined in the claims.

In order to achieve this goal, the present inventors have found that by adding one or both of Cu and P to a Sn-Bi-Sb solder alloy, the growth of a P-rich layer is significantly suppressed by suppression of diffusion of Ni while maintaining the low melting point, good ductility, and a high tensile strength of the solder alloy, thereby making it possible to markedly improve the shear strength of the soldered portion.

A lead-free solder alloy of the present invention has an alloy composition consisting essentially of, in mass percent, Bi: 31 - 59%, Sb: 0.15 - 0.75%, at least one element selected from the group consisting of Cu: 0.3 - 1.0% and P: 0.002 - 0.055%, and a balance of Sn.

Further, a solder joint of the present invention is formed from the above mentioned lead-free solder alloy on Cu electrode having a Ni plated layer.

In addition, a substrate of the present invention is provided with a plurality of Cu electrodes each having a Ni plated layer, has a thickness of at most 5 mm, and has a solder joint formed from the above-mentioned lead-free solder alloy.

### Effects of the Invention

The lead-free solder alloy according to the present invention has a low melting point sufficient to suppress warping of a substrate during soldering, along with good ductility and a high tensile strength, and by suppressing the formation of a P-rich layer in the bonding interface during soldering to an electrode treated by electroless Ni plating, it is possible to improve the shear strength of the soldered portion.

Further, the lead-free solder alloy according to the present invention is hard to be broken in the interface between the electrode and the soldered portion following the improvement of the shear strength of the soldered portion in the above-mentioned solder alloy, thereby maintaining excellent bonding reliability even in a case where a thinner substrate than a conventional one is used.

Additionally, a substrate according to the present invention reduces its warping at the time of soldering so that excellent bonding reliability can be achieved. Brief Explanation of the Drawings

[Figure 1] FIG. 1 is a SEM photograph of the surface of an electrode after soldering is carried out using a Sn-58Bi solder alloy on a Cu electrode treated by electroless Ni/Au plating and the resulting soldered portion is removed by shearing.
[Figure 2A] FIG. 2A is a SEM photograph of cross section in the vicinity of the interface between a soldered portion and an electrode in a solder joint formed by soldering of a Cu electrode which had undergone electroless Ni/Au plating using a Sn-58Bi solder alloy.
[Figure 2B] FIG. 2B is a SEM photograph of cross section in the vicinity of the interface between a soldered portion and an electrode in a solder joint formed by soldering of a Cu electrode which had undergone electroless Ni/Au plating using a Sn-40Bi-0.5Sb-0.5Cu solder alloy according to the present invention.
[Figure 2C] FIG. 2C is a SEM photograph of cross sections in the vicinity of the interface between a soldered portion and an electrode in a solder joint formed by soldering of a Cu electrode which had undergone electroless Ni/Pd/Au plating using a Sn-58Bi solder alloy.
[Figure 2D] FIG. 2D is a SEM photograph of cross section in the vicinity of the interface between a soldered portion and an electrode in a solder joint formed by soldering of a Cu electrode which had undergone electroless Ni/Pd/Au plating using a Sn-40Bi-0.5Sb-0.5Cu solder alloy according to the present invention.

### Modes for Carrying Out the Invention

Below, the present invention will be explained in greater detail. In the following explanation, percent with respect to a solder alloy composition means mass percent unless otherwise specified.

A lead-free solder alloy according to the present invention is a Sn-Bi-Sb solder alloy which further contains Cu and/or P. The solder alloy exhibits the low melting point and high ductility which are inherent properties of a Sn-Bi-Sb solder alloy. Furthermore, particularly when this solder alloy is used for soldering of an electrode which has been subjected to electroless Ni plating such as electroless Ni/Au plating or Ni/Pd/Au plating, it can suppress the growth of a brittle P-rich layer by suppressing diffusion of Ni into the solder alloy and can greatly improve the shear strength of a soldered portion. As a result, the lead-free solder alloy according to the present invention can guarantee excellent joint reliability (bonding reliability of a soldered portion) while suppressing warping of a thin substrate during the soldering.

As mentioned previously, the electroless Ni plating is typically followed by other noble metal plating such as Au plating or Pd/Au plating.

Thus, the Au plating layer is formed atop the Ni plating layer. However, such Au plating layer or other noble metal plating layer has an extremely small thickness of around 0.05 µm and disappears during soldering by diffusion into a solder alloy. Therefore, in the present invention, there is no particular need to take the Au plating or other noble metal plating into consideration when evaluating various properties.

A solder alloy according to the present invention has the following alloy composition.

The Bi content is 31 - 59%. Bi lowers the melting point of a solder alloy. If the Bi content is lower than 31%, the melting point of the solder alloy increases and warping of a substrate may occur at the time of soldering. If the Bi content is higher than 59%, the tensile strength and ductility deteriorate due to precipitation of Bi. The Bi content is preferably 32 - 58% and more preferably 35 - 58%.

The Sb content is 0.15 - 0.75%. Sb increases the ductility of a solder alloy. If the Sb content is lower than 0.15%, ductility (elongation) deteriorates, while if the Sb content is greater than 0.75%, ductility decreases due to the formation of its compounds. The Sb content is preferably 0.2 - 0.75% and more preferably 0.2 - 0.7%.

The Cu content is 0.3 - 1.0%. Cu suppresses the growth of a P-rich layer which forms in the interface between a Ni plated layer formed by electroless Ni plating and a soldered portion. If the Cu content is less than 0.3%, it is not possible to suppress the formation of a P-rich layer, and the shear strength decreases. If the Cu content is larger than 1.0%, intermetallic compounds of Sn with Cu are excessively formed in the solder alloy and the ductility of the solder alloy decreases. In addition, a Cu content exceeding 1.0% markedly increases the melting point of a solder alloy and worsens the wettability of the solder alloy. Furthermore, operability is worsened due to the occurrence of warping of a substrate. The Cu content is preferably 0.3 - 0.8% and more preferably 0.3 - 0.7%.

The P content is 0.002 - 0.055%. Like Cu, P also suppresses the growth of a P-rich layer. If the P content is less than 0.002%, it is not possible to suppress the formation of a P-rich layer, and the shear strength decreases. If the P content is higher than 0.055%, particularly when using Cu electrodes or when the solder alloy contains Cu, compounds of Sn, Cu, and P form in the solder alloy or in the joint interface, and the shear strength decreases. The P content is preferably 0.003 - 0.055% and more preferably 0.003 - 0.05%.

Thus, Cu and P both exhibit the effect of suppressing the diffusion of Ni into the solder alloy and suppressing the growth of a P-rich layer, thereby markedly improving the shear strength when they are added to a Sn-Bi-Sb lead-free solder alloy, particularly in soldering of an electrode having an electroless Ni plating layer formed thereon. In the present invention, it is possible to add only one of Cu and P or add both of Cu and P. From the standpoint of avoiding with certainty the formation of a phosphorus compound which may occur when a solder alloy has a high P content, it is preferable to preferentially add Cu to P.

With a soldered portion formed on an electrode having an electroless Ni plating layer using the lead-free solder alloy according to the present invention, when the soldered portion is sheared off, the electroless Ni plating layer is not exposed. As stated above, the lead-free solder alloy according to the present invention can suppress the diffusion of Ni contained in the electroless plating layer into the solder alloy, thereby suppressing the growth of a P-rich layer which is formed on the surface of the plating layer. As a result thereof, this solder alloy can markedly improve the mechanical properties and particularly the shear strength of the interface between the electrode and the soldered portion.

The lead-free solder alloy according to the present invention can be used in the form of a preform, a wire, a solder paste, a solder ball, or the like. The lead-free solder alloy according to the present invention has high shear strength in addition to high tensile strength and ductility. Therefore, when it is used in the form of a solder ball, it can be made into a solder ball which is smaller than a conventional solder ball. As a result thereof, it can adequately cope with decreases in the size of the electrode and/or the thickness of the substrate used in electronic parts and the like.

The lead-free solder alloy according to the present invention can be used to connect the terminals (electrodes) of a package such as an IC chip to the terminals (electrodes) of a substrate such as a printed circuit board (PCB). As stated above, the lead-free solder alloy according to the present invention has excellent shear strength while maintaining a high ductility and high tensile strength. Therefore, even a substrate slightly warps at the time of reflow of the solder during soldering, there is no fracture in the interface between the terminals (electrodes) and the soldered portions. As a result thereof, excellent joint reliability can be maintained even when using a substrate which is thinner than the conventional one.

### Executed Examples

The solder alloys having compositions shown in Table 1 were prepared. The melting point, the tensile strength, the elongation (ductility), the thickness of a P-rich layer, the shear strength, and the percent exposure of plating were determined for each solder alloy as described below. The results are also shown in Table 1.

### (Melting Point of the Solder Alloy)

The melting point (°C) of each solder alloy was measured using a differential scanning calorimeter (DSC) (Model DSC 6200 of Seiko Instruments, Inc.) at a rate of temperature increase of 5° C per minute.

### (Tensile Strength and Elongation (Ductility))

The solder alloys having compositions shown in Table 1 were formed into test specimens for a tensile test, and the tensile strength (MPa) and the elongation (%) of the specimens were measured using a tensile strength tester (Auto Graph AG-20kN manufactured by Shimadzu Corporation) at a stroke speed of 6.0 mm per minute and a strain rate of 0.33% per second. It is conceivable that if a solder alloy has a tensile strength of at least 70 MPa and elongation of at least 70%, this solder alloy can be used without any practical problems.

### (Thickness of a P-Rich Layer)

By using the solder alloys having compositions shown in Table 1, the soldering was carried out to Cu electrodes of a PCB having a thickness of 1.2 mm. Each of the electrodes had a diameter of 0.3 mm and had treated by electroless Ni/Au plating in a conventional manner. Soldering was carried out by placing a solder ball with a diameter of 0.3 mm prepared from each solder alloy on each of the electrodes of the circuit board using a water soluble flux (WF-6400 manufactured by Senju Metal Industry Co., Ltd.) and then carrying out reflow soldering with a reflow profile having a peak temperature of 210° C to obtain samples having solder joints.

The thickness of a P-rich layer (µm) of each sample was determined by observing a cross section of the sample in the vicinity of the bonding interface between the soldered portion and the Ni plating layer in the solder alloy under a SEM, analyzing the resulting SEM image using an image analyzer (JSM-7000F manufactured by JEOL, Ltd.) to identify a P-rich layer which is shown by a different color from other layers, and measuring the thickness of the identified P-rich layer. The thickness of the P-rich layer was measured in the same manner for 5 samples which were prepared under the same conditions, and the average value was made the thickness of the P-rich layer.

### (Shear Strength)

The solder alloys having compositions shown in Table 1 were used for soldering to PCB electrodes which were similar to the electrodes used for measurement of the thickness of a P-rich layer and which were either untreated Cu electrodes or Cu electrodes which had undergone electroless Ni/Au plating to form soldered portions. The shear strength (N) of the soldered portions was measured using a high speed bond tester (Series 4000HS manufactured by Dage Corporation) at 1000 mm per second. It is conceivable that if the shear strength is at least 2.21 N for Cu electrodes and the shear strength is at least 2.26 N for Cu electrodes with electroless Ni/Au plating, this alloy can be used without any practical problems.

### (Percent Exposure of Plating)

After the shear strength test of the solder alloys by soldering to PCB electrodes having a Ni/Au plating layer, a SEM photograph was taken of the surface of the electrode from which the soldered portion had been removed by shearing as a result of the test. EDS analysis was performed on the photograph to identify the region where Ni plating was exposed, and the area of the identified region was measured using image analysis software (Scandium) provided by Seika Corporation. The obtained area of the region where Ni plating was exposed was divided by the overall area of the electrode to calculate the percent exposure of plating.

**[Table 1]**

| | Alloy Composition (mass %) | | | | | | M.P. (°C) | TS (MPa) | El (%) | Thickness of P-rich layer (µm) | Shear strength (N) | | % Exposure of plating (Ni/Au plating) |
|---|---|---|---|---|---|---|---|---|---|---|---|---|---|
| | | | | | | | | | | | Cu electrode | Electro-less Ni/Au plating | |
| | Sn | Ag | Bi | Sb | Cu | P | | | | | | | |
| Ex. 1 | bal. | 0 | 35 | 0.2 | 0.3 | 0 | 183.2 | 79.4 | 79.1 | 0.014 | 2.61 | 2.47 | 0 |
| Ex. 2 | bal. | 0 | 35 | 0.5 | 0.5 | 0 | 183.6 | 80.3 | 78.9 | 0.012 | 2.66 | 2.51 | 0 |
| Ex. 3 | bal. | 0 | 35 | 0.7 | 0.7 | 0 | 184.6 | 80.1 | 77.7 | 0.011 | 2.85 | 2.69 | 0 |
| Ex. 4 | bal. | 0 | 40 | 0.2 | 0.3 | 0 | 174.6 | 76.1 | 88.1 | 0.013 | 2.56 | 2.77 | 0 |
| Ex. 5 | bal. | 0 | 40 | 0.5 | 0.5 | 0 | 173.5 | 75.8 | 92.3 | 0.014 | 2.55 | 2.96 | 0 |
| Ex. 6 | bal. | 0 | 40 | 0.7 | 0.7 | 0 | 174.5 | 76.6 | 90.4 | 0.012 | 2.63 | 2.66 | 0 |
| Ex. 7 | bal. | 0 | 45 | 0.2 | 0.3 | 0 | 165.7 | 76.7 | 74.9 | 0.011 | 2.31 | 2.67 | 0 |
| Ex. 8 | bal. | 0 | 45 | 0.5 | 0.5 | 0 | 165.1 | 76.1 | 80.4 | 0.010 | 2.33 | 2.63 | 0 |
| Ex. 9 | bal. | 0 | 45 | 0.7 | 0.7 | 0 | 166.9 | 75.9 | 76.1 | 0.014 | 2.49 | 2.81 | 0 |
| Ex. 10 | bal. | 0 | 58 | 0.2 | 0.3 | 0 | 139.8 | 72.1 | 71.8 | 0.010 | 2.43 | 2.77 | 0 |
| Ex. 11 | bal. | 0 | 58 | 0.5 | 0.5 | 0 | 140.7 | 71.6 | 73.6 | 0.012 | 2.34 | 2.99 | 0 |
| Ex. 12 | bal. | 0 | 58 | 0.7 | 0.7 | 0 | 140.6 | 72.0 | 73.9 | 0.012 | 2.55 | 2.95 | 0 |
| Ex. 13 | bal. | 0 | 35 | 0.5 | 0 | 0.003 | 183.9 | 78.9 | 79.1 | 0.021 | 2.42 | 2.26 | 0 |
| Ex. 14 | bal | 0 | 35 | 0.5 | 0 | 0.02 | 184.2 | 76.1 | 77.3 | 0.016 | 2.45 | 2.43 | 0 |
| Ex. 15 | bal. | 0 | 35 | 0.5 | 0 | 0.05 | 185.2 | 76.5 | 77.1 | 0.013 | 2.51 | 2.31 | 0 |
| Ex. 16 | bal. | 0 | 40 | 0.5 | 0 | 0.003 | 174.9 | 75.3 | 88.8 | 0.022 | 2.33 | 2.49 | 0 |
| Ex. 17 | bal. | 0 | 40 | 0.5 | 0 | 0.02 | 174.6 | 74.7 | 90.4 | 0.015 | 2.26 | 2.63 | 0 |
| Ex. 18 | bal. | 0 | 40 | 0.5 | 0 | 0.05 | 175.7 | 76.1 | 89.9 | 0.011 | 2.31 | 2.59 | 0 |
| Ex. 19 | bal. | 0 | 45 | 0.5 | 0 | 0.003 | 166.6 | 75.1 | 78.3 | 0.021 | 2.21 | 2.43 | 0 |
| Ex. 20 | bal. | 0 | 45 | 0.5 | 0 | 0.02 | 166.4 | 75.8 | 78.8 | 0.015 | 2.30 | 2.66 | 0 |
| Ex. 21 | bal. | 0 | 45 | 0.5 | 0 | 0.05 | 166.8 | 75.9 | 78.0 | 0.012 | 2.23 | 2.75 | 0 |
| Ex. 22 | bal. | 0 | 58 | 0.5 | 0 | 0.003 | 140.6 | 70.4 | 75.3 | 0.013 | 2.26 | 2.53 | 0 |
| Ex. 23 | bal. | 0 | 58 | 0.5 | 0 | 0.02 | 139.7 | 70.7 | 75.1 | 0.015 | 2.29 | 2.67 | 0 |
| Ex. 24 | bal. | 0 | 58 | 0.5 | 0 | 0.05 | 139.9 | 70.9 | 74.8 | 0.012 | 2.22 | 2.87 | 0 |
| Ex. 25 | bal. | 0 | 35 | 0.2 | 0.3 | 0.003 | 183.5 | 79.9 | 78.6 | 0.010 | 2.74 | 2.60 | 0 |
| Ex. 26 | bal. | 0 | 35 | 0.5 | 0.5 | 0.02 | 184.0 | 80.4 | 79.2 | 0.012 | 2.75 | 2.78 | 0 |
| Ex. 27 | bal. | 0 | 35 | 0.7 | 0.7 | 0.05 | 184.2 | 78.3 | 70.4 | 0.011 | 2.75 | 2.67 | 0 |
| Ex. 28 | bal. | 0 | 40 | 0.2 | 0.3 | 0.003 | 174.4 | 76.1 | 89.8 | 0.011 | 2.64 | 2.78 | 0 |
| Ex. 29 | bal. | 0 | 40 | 0.5 | 0.5 | 0.02 | 174.1 | 75.8 | 90.1 | 0.012 | 2.59 | 2.73 | 0 |
| Ex 30 | bal. | 0 | 40 | 0.7 | 0.7 | 0.05 | 174.8 | 75.4 | 89.9 | 0.011 | 2.60 | 2.81 | 0 |
| Ex. 31 | bal. | 0 | 45 | 0.2 | 0.3 | 0.003 | 166.4 | 76.2 | 78.3 | 0.014 | 2.46 | 2.77 | 0 |
| Ex. 32 | bal. | 0 | 45 | 0.5 | 0.5 | 0.02 | 165.9 | 75.8 | 77.9 | 0.012 | 2.39 | 2.84 | 0 |
| Ex. 33 | bal. | 0 | 45 | 0.7 | 0.7 | 0.05 | 166.8 | 75.5 | 80.1 | 0.011 | 2.40 | 2.79 | 0 |
| Ex. 34 | bal. | 0 | 58 | 0.2 | 0.3 | 0.003 | 139.9 | 70.8 | 72.6 | 0.012 | 2.60 | 2.86 | 0 |
| Ex. 35 | bal. | 0 | 58 | 0.5 | 0.5 | 0.02 | 140.0 | 71.1 | 72.5 | 0.010 | 2.58 | 2.90 | 0 |
| Ex. 36 | bal. | 0 | 58 | 0.7 | 0.7 | 0.05 | 140.3 | 71.7 | 71.8 | 0.011 | 2.55 | 2.84 | 0 |

**[Table 2]**

| | Alloy Composition (mass %) | | | | | | M.P. (°C) | TS (MPa) | El (%) | Thickness of P-rich layer (µm) | Shear strength (N) | | % Exposure of plating (Ni/Au plating) |
|---|---|---|---|---|---|---|---|---|---|---|---|---|---|
| | | | | | | | | | | | Cu electrode | Electroless Ni/Au plating | |
| | Sn | Ag | Bi | Sb | Cu | P | | | | | | | |
| Comp. 1 | bal. | 3 | 0 | 0 | 0.5 | 0 | 220.0 | 48.1 | 79.8 | 0.025 | 2.47 | 1.98 | 0 |
| Comp. 2 | bal. | 0 | 30 | 0 | 0 | 0 | 190.7 | 80.8 | 60.0 | 0.095 | 2.39 | 2.02 | 57 |
| Comp. 3 | bal. | 0 | 35 | 0 | 0 | 0 | 181.3 | 79.3 | 73.6 | 0.097 | 2.28 | 1.87 | 55 |
| Comp. 4 | bal. | 0 | 40 | 0 | 0 | 0 | 174.5 | 76.4 | 82.5 | 0.099 | 2.42 | 1.83 | 53 |
| Comp. 5 | bal. | 0 | 45 | 0 | 0 | 0 | 163.5 | 74.4 | 72.4 | 0.093 | 2.31 | 1.87 | 66 |
| Comp. 6 | bal. | 0 | 58 | 0 | 0 | 0 | 140.0 | 69.7 | 65.8 | 0.092 | 2.30 | 2.01 | 59 |
| Comp. 7 | bal. | 0 | 60 | 0 | 0 | 0 | 149.2 | 68.3 | 61.2 | 0.097 | 2.47 | 1.64 | 76 |
| Comp. 8 | bal. | 0 | 35 | 0.1 | 0 | 0 | 181.6 | 78.5 | 75.3 | 0.099 | 2.31 | 1.86 | 60 |
| Comp. 9 | bal. | 0 | 35 | 0.2 | 0 | 0 | 181 .9 | 77.6 | 79.0 | 0.089 | 2.47 | 1.89 | 68 |
| Comp. 10 | bal. | 0 | 35 | 0.5 | 0 | 0 | 183.6 | 78.3 | 80.6 | 0.094 | 2.55 | 1.88 | 49 |
| Comp. 11 | bal. | 0 | 35 | 0.7 | 0 | 0 | 184.4 | 79.1 | 80.2 | 0.091 | 2.43 | 1.93 | 53 |
| Comp. 12 | bal. | 0 | 35 | 0.8 | 0 | 0 | 185.1 | 81.4 | 72.8 | 0.095 | 2.35 | 1.84 | 62 |
| Comp. 13 | bal. | 0 | 40 | 0.2 | 0 | 0 | 174.9 | 75.8 | 87.8 | 0.095 | 2.35 | 1.85 | 55 |
| Comp. 14 | bal. | 0 | 40 | 0.5 | 0 | 0 | 175.1 | 75.0 | 92.9 | 0.094 | 2.32 | 1.99 | 47 |
| Comp. 15 | bal. | 0 | 40 | 0.7 | 0 | 0 | 175.7 | 76.0 | 89.3 | 0.092 | 2.19 | 2.00 | 49 |
| Comp. 16 | bal. | 0 | 45 | 0.2 | 0 | 0 | 164.5 | 75.4 | 74.3 | 0.095 | 2.27 | 1.99 | 43 |
| Comp. 17 | bal. | 0 | 45 | 0.5 | 0 | 0 | 166.9 | 76.3 | 79.4 | 0.089 | 2.29 | 1.86 | 56 |
| Comp. 18 | bal. | 0 | 45 | 0.7 | 0 | 0 | 167.3 | 74.2 | 77.5 | 0.094 | 2.30 | 1.86 | 49 |
| Comp. 19 | bal. | 0 | 58 | 0.2 | 0 | 0 | 139.8 | 70.3 | 69.7 | 0.091 | 2.23 | 2.00 | 55 |
| Comp. 20 | bal. | 0 | 58 | 0.5 | 0 | 0 | 140.2 | 70.6 | 74.9 | 0.094 | 2.31 | 1.97 | 49 |
| Comp.21 | bal. | 0 | 58 | 0.7 | 0 | 0 | 140.1 | 69.9 | 75.2 | 0.098 | 2.35 | 1.93 | 58 |
| Comp. 22 | bal. | 0 | 35 | 0.2 | 0.2 | 0 | 183.7 | 77.7 | 78.3 | 0.044 | 2.47 | 1.99 | 35 |
| Comp. 23 | bal. | 0 | 35 | 0.5 | 0 | 0.001 | 184.3 | 79.0 | 79.9 | 0.063 | 2.44 | 1.87 | 34 |
| Comp. 24 | bal. | 0 | 35 | 0.5 | 0 | 0.06 | 184.9 | 76.9 | 68.7 | 0.011 | 2.16 | 2.21 | 0 |

As shown in Table 1, for each of the Examples 1 - 36, the solder alloy had a melting point of lower than 190° C, a tensile strength of at least 70 MPa, and an elongation of at least 70%. The thickness of the P-rich layer in a soldered portion formed on electrodes treated by electroless Ni/Au plating was at most 0.022 µm, and the shear strength was at least 2.21 N on Cu electrodes and at least 2.26 N on electroless Ni/Au plating. The percent exposure of plating when used for soldering to Ni/Au plated electrodes and detached from the electrodes by shearing was 0% for each of the solder alloys.

In contrast, as shown in Table 2, Comparative Example 1, which was a Sn-3Ag-0.5Cu solder alloy, had a high melting point and a low tensile strength, and it had a thick P-rich layer and a markedly decreased shear strength when used for soldering to electrodes treated by electroless Ni/Au plating. Although not shown in Table 1, a large amount of warping of the substrate was observed.

For Comparative Examples 2 - 7 which illustrate Sn-Bi solder alloys, as the Bi content increased, the tensile strength and the elongation deteriorated, the P-rich layer became thicker, the shear strength of a soldered portion on electrodes having electroless Ni/Au plating decreased, and the percent exposure of plating became high. Comparative Examples 8 - 21, which illustrate Sn-Bi-Sb solder alloys, had an overall improvement of tensile strength and elongation compared to the Sn-Bi solder alloys, but the thickness of the P-rich layer was large, the shear strength was poor, and the Ni plating layer was exposed after removal of the solder joint by shearing.

For Comparative Example 22 which had a low Cu content and Comparative Example 23 which had a low P content, the P-rich layer became thick, the shear strength for the electroless Ni/Au plating was poor, and the Ni plating layer was exposed after removal of the solder joint by shearing.

For Comparative Example 24 the elongation deteriorated, and the shear strength was poor for both plates of Cu electrodes having electroless Ni plating and electroless Ni/Au plating.

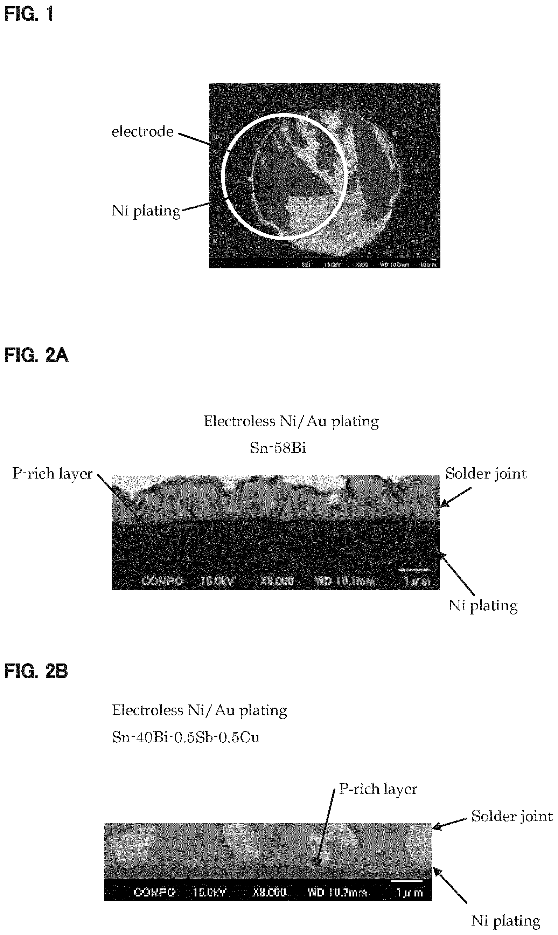

Figure 1 shows a SEM photograph of a sheared surface of an electrode produced by forming a soldered portion on an electrode made of Cu and treated by electroless Ni/Au plating using a Sn-58Bi solder alloy and removing the soldered portion by shearing in a shear strength test in the manner described above. In each of the Comparative Examples 2 - 23, the Ni plating layer was exposed as shown in Figure 1. It is conceivable that this exposure is because the P-rich layer grew and fracture by shearing took place at the interface between the P-rich layer and the Ni plating layer.

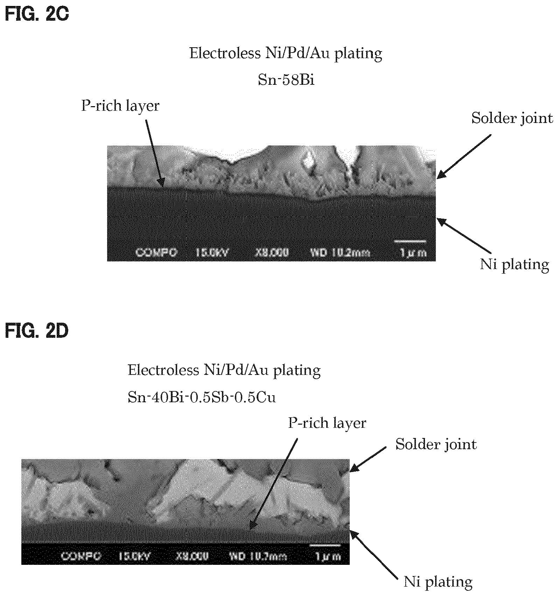

Figures 2A and 2B are SEM photographs of cross sections in the vicinity of the interface between a soldered portion and an electrode in the solder joint formed by soldering of a Cu electrode which had undergone electroless Ni/Au plating using, respectively, a conventional Sn-58Bi alloy and a Sn-40Bi-0.5Sb-0.5Cu alloy according to the present invention. Figure 2C and 2D are SEM photographs of cross sections in the vicinity of the interface between a soldered portion and an electrode in the solder joint formed by soldering of a Cu electrode which had undergone electroless Ni/Pd/Au plating using, respectively, a conventional Sn-58Bi alloy and a Sn-40Bi-0.5Sb-0.5Cu alloy according to the present invention. From Figures 2A and 2C, it is apparent that with a Sn-58Bi solder alloy (Comparative Example 6: shear strength of 2.01 N for electroless Ni/Au plating), a P-rich layer grew because the solder alloy did not contain Cu. In contrast, from Figures 2B and 2D, it is apparent that the growth of a P-rich layer was suppressed by the presence of Cu in a Sn-40Bi-0.5Sb-0.5Cu alloy according to the present invention (Executed Example 5: shear strength of 2.96 N for electroless Ni/Au plating). Thus, it can be seen from Figures 2A to 2D that the shear strength was markedly increased by suppressing the growth of a P-rich layer.

## Claims

1. A lead-free solder alloy having an alloy composition consisting of, in mass percent, Bi: 31 - 59%, Sb: 0.15 - 0.75%, at least one element selected from the group consisting of Cu: 0.3 - 1.0% and P: 0.002 - 0.055%, and a balance of Sn, wherein said lead-free solder has a melting point of lower than 190 degrees C, a tensile strength of at least 70 MPa and an elongation of at least 70%.

2. A solder joint formed from a lead-free solder alloy according to claim 1 on a Cu electrode having a Ni plated layer.

3. A solder joint according to claim 2 wherein the Ni plated layer is a P-containing electroless plating layer.

4. A substrate having a thickness of at most 5 mm, having a plurality of Cu electrodes each having a Ni plated layer, and having a solder joint formed thereon from the lead-free solder alloy according to claim 1.

5. A substrate according to claim 4 wherein the Ni plated layer is a P-containing electroless plating layer.

## Patentansprüche

1. Bleifreie Lotlegierung mit einer Legierungszusammensetzung, die, in Massenprozent, aus Bi: 31-59 %, Sb: 0,15-0,75 %, mindestens einem Element aus der Gruppe bestehend aus Cu: 0,3-1,0 % und P: 0,002-0,055 % und Rest Sn besteht, wobei das bleifreie Lot einen Schmelzpunkt von weniger als 190 Grad C, eine Zugfestigkeit von mindestens 70 MPa und eine Dehnung von mindestens 70 % aufweist.

2. Lötverbindung, gebildet aus einer bleifreien Lotlegierung nach Anspruch 1 auf einer Cu-Elektrode mit einer Ni-Plattierungsschicht.

3. Lötverbindung nach Anspruch 2, wobei es sich bei der Ni-Plattierungsschicht um eine P-haltige stromlos abgeschiedene Plattierungsschicht handelt.

4. Substrat mit einer Dicke von höchstens 5 mm mit mehreren Cu-Elektroden, die jeweils eine Ni-Plattierungsschicht aufweisen, und mit einer aus der bleifreien Lötlegierung nach Anspruch 1 darauf ausgebildeten Lötverbindung.

5. Substrat nach Anspruch 4, wobei es sich bei der Ni-Plattierungsschicht um eine P-haltige stromlos abgeschiedene Plattierungsschicht handelt.

## Revendications

1. Alliage de brasage tendre sans plomb ayant une composition d'alliage constituée de, en pourcentage massique, Bi : 31-59 %, Sb : 0,15-0,75 %, au moins un élément choisi dans le groupe constitué par Cu : 0,3-1,0 % et P : 0,002-0,055 %, et pour le reste Sn, ladite brasure tendre sans plomb ayant un point de fusion de moins de 190 degrés C, une résistance à la traction d'au moins 70 MPa et un allongement d'au moins 70 %.

2. Joint à brasure tendre formé à partir d'un alliage de brasage tendre sans plomb selon la revendication 1 sur une électrode de Cu ayant une couche nickelée.

3. Joint à brasure tendre selon la revendication 2 dans lequel la couche nickelée est une couche de dépôt autocatalytique contenant P.

4. Substrat ayant une épaisseur de 5 mm maximum, ayant une pluralité d'électrodes de Cu ayant chacune une couche nickelée, et ayant un joint à brasure tendre formé par-dessus à partir de l'alliage de brasage tendre sans plomb selon la revendication 1.

5. Substrat selon la revendication 4 dans lequel la couche nickelée est une couche de dépôt autocatalytique contenant P.
